(19) **Europäisches Patentamt**
**European Patent Office**
**Office européen des brevets**

(11) **EP 3 950 273 A1**

(12) **EUROPEAN PATENT APPLICATION**
published in accordance with Art. 153(4) EPC

(43) Date of publication:
09.02.2022 Bulletin 2022/06

(21) Application number: 20783177.7

(22) Date of filing: 30.03.2020

(51) International Patent Classification (IPC):
*B29C 63/02* (2006.01)  *B32B 27/00* (2006.01)
*B65H 23/195* (2006.01)  *B32B 37/06* (2006.01)
*B32B 37/12* (2006.01)  *B29C 65/02* (2006.01)
*B29C 65/48* (2006.01)  *B32B 7/027* (2019.01)

(52) Cooperative Patent Classification (CPC):
**B29C 63/02; B29C 65/02; B29C 65/48;
B32B 7/027; B32B 27/00; B32B 37/06;
B32B 37/12; B65H 23/195**

(86) International application number:
**PCT/JP2020/014595**

(87) International publication number:
**WO 2020/203983 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 29.03.2019 JP 2019067523

(71) Applicant: TOYOBO CO., LTD.
**Osaka-shi
Osaka 530-8230 (JP)**

(72) Inventors:
• **YAMASHITA, Masahiro
Shiga 520-0292 (JP)**
• **TOKUDA, Kaya
Shiga 520-0292 (JP)**
• **OKUYAMA, Tetsuo
Shiga 520-0292 (JP)**

(74) Representative: **Vossius & Partner
Patentanwälte Rechtsanwälte mbB
Siebertstraße 3
81675 München (DE)**

(54) **HEAT-RESISTANT POLYMER FILM LAMINATE AND METHOD FOR PRODUCING
HEAT-RESISTANT POLYMER FILM LAMINATE**

(57) The present invention enables the achievement of a laminate of heat-resistant polymer films, which does not use a bonding material having inferior heat resistance. According to the present invention, a polyvalent amine compound serving as a reactive compound is applied to heat-resistant polymer films such as PET, PEN or PI films, and the resulting polymer films are superposed upon each other and subsequently subjected to a heat treatment under predetermined conditions, thereby obtaining a laminate of heat-resistant polymer films. Since the thus-obtained laminate does not use a bonding material, the heat resistance is not decreased and the film properties before lamination are not deteriorated. Since the process for obtaining this laminate has excellent productivity, this laminate is useful as a low-cost thick heat-resistant polymer film or sheet of high performance.

EP 3 950 273 A1

**Description**

TECHNICAL FIELD

The present invention relates to a laminate in which long heat-resistant polymer films are laminated with a reactive liquid interposed therebetween, and a method for producing the same. More specifically, the present invention relates to a method for producing a heat-resistant polymer film laminate having high productivity.

BACKGROUND ART

Silane coupling agents are widely used to improve the wettability, adhesive properties and the like of both inorganic materials such as glass and polymer resins at the interface. Silane coupling agents have strong adsorptive power to inorganic materials, and at the same time, easily undergo self-condensation reaction. Hence, particles of the condensate are formed in the treatment liquid and the coating liquid, and these particles often cause foreign matter defects on the coated surface and the treated surface.

In order to solve such a problem, for example, Patent Document 1 discloses a technology in which a silane coupling agent is applied to a substrate in a gas phase state. According to such a method, it is possible to realize an extremely thin silane coupling agent layer with less defects. However, the method does not eliminate the potential possibility that condensates of silane coupling agent are generated.

PRIOR ART DOCUMENTS

PATENT DOCUMENTS

Patent Document 1: JP-A-2015-178237

SUMMARY OF THE INVENTION

PROBLEMS TO BE SOLVED BY THE INVENTION

The present inventors have diligently studied to solve the above problems, and as a result, found out a method for producing a polyimide film using a reactive compound other than a silane coupling agent. In the present invention, it has been found out that a polyimide film can be laminated while maintaining the long state and this method can be applied to all heat-resistant polymer films that are widely classified as engineering plastics, and the present invention has been thus completed.

MEANS FOR SOLVING THE PROBLEMS

In other words, the present invention has the following configuration.

[1] A heat-resistant polymer film laminate having a structure in which at least two heat-resistant polymer films are laminated, in which there is an amide bond derived from an organic compound having two or more amino groups and a boiling point of 250°C or less at a laminated interface of the two heat-resistant polymer films.

[2] A method for producing a heat-resistant polymer film laminate having a structure in which at least two heat-resistant polymer films are laminated, the method including at least:

(1) a step of winding the at least two heat-resistant polymer films in a state where an organic compound having two or more amino groups and a boiling point of 250°C or less exists between the at least two heat-resistant polymer films to obtain a multilayer wound roll of heat-resistant polymer film; and
(2) a step of subjecting the multilayer wound roll to a heat treatment at a temperature of 40°C to 180°C to bond the at least two heat-resistant polymer films to each other.

[3] The method for producing a heat-resistant polymer film laminate according to [2], in which a bonding surface of at least either of the heat-resistant polymer films is treated with an organic compound having two or more amino groups and a boiling point of 250°C or less in advance.

[4] The method for producing a heat-resistant polymer film laminate according to [2], in which the state where an organic compound having two or more amino groups and a boiling point of 250°C or less exists between the at least two heat-resistant polymer films is formed by applying the organic compound to a bonding surface of at least either of the at least two heat-resistant polymer films.

[5] The method for producing a heat-resistant polymer film laminate according to any one of [2] to [4], in which a tension applied to films when the films are wound in the roll shape is 0.001 N/cm to 12 N/cm.

[6] The method for producing a heat-resistant polymer film laminate according to any one of [2] to [5], in which a water content in a heat-resistant polymer film before being subjected to the heat treatment is in a range of 0.5% to 4.0% by mass.

In the present invention, it is preferable to further have the following configuration.

[7] The method for producing a heat-resistant polymer film laminate according to any one of [2] to [6], in which the heat treatment temperature is in a range of 50°C to 120°C.

[8] The method for producing a heat-resistant polymer film laminate according to any one of [2] to [7], in which a bonding surface of the heat-resistant polymer film has been subjected to plasma treatment.

[9] The method for producing a heat-resistant polymer film laminate according to any one of [2] to [8], in which a bonding surface of the heat-resistant polymer film has been subjected to plasma treatment in presence of oxygen.

[10] The method for producing a heat-resistant polymer film laminate according to any one of [2] to [9], in which a release film is wound together at the time of winding.

[11] The method for producing a heat-resistant polymer film laminate according to any one of [2] to [10], in which the heat-resistant polymer film is a polyimide film.

[12] The method for producing a heat-resistant polymer film laminate according to any one of [2] to [10], in which the heat-resistant polymer film is an aromatic polyester film.

[13] The method for producing a heat-resistant polymer film laminate according to any one of [2] to [10], in which the heat-resistant polymer film is a polyamide film.

[14] The method for producing a heat-resistant polymer film laminate according to any one of [2] to [10], in which the heat-resistant polymer film is a fully aromatic polyester film.

[15] The method for producing a heat-resistant polymer film laminate according to any one of [2] to [10], in which the heat-resistant polymer film is a polyamide-imide film.

[16] The method for producing a heat-resistant polymer film laminate according to any one of [2] to [10], in which the heat-resistant polymer film is a fluororesin film.

EFFECT OF THE INVENTION

In the heat-resistant polymer film laminate of the present invention, the heat-resistant polymer films to be laminated are bonded to each other and laminated by crosslinking the functional groups existing on the bonding surfaces of the heat-resistant polymer films to each other using an organic compound having two or more amino groups and a boiling point of 250°C or less as a reactive compound. Since the reactive compound used in the present invention is not highly self-reactive as a silane coupling agent is, there is essentially no possibility of foreign matter generation due to self-condensation.

In general, the heat resistance of a laminate composed of a plurality of layers is dominated by the layer exhibiting the lowest heat resistance among the layers constituting the laminate. In a number of cases, the bonding material layer has the lowest heat resistance. Since this bonding material layer does not exist in the present invention, it is possible to obtain a laminate without impairing the heat resistance of the heat-resistant polymer films constituting the laminate.

In general, the physical properties such as mechanical strength are excellent when polymer films and sheets are produced in relatively thin film thicknesses (thin). In the present invention, it is possible to increase the thickness without impairing the excellent physical properties realized by thin films by increasing the thickness through the lamination of thin films.

In the present invention, a heat-resistant polymer film laminate is produced by a process including at least:

(1) a step of winding at least two heat-resistant polymer films in a state where an organic compound having two or more amino groups and a boiling point of 250°C or less exists between the heat-resistant polymer films to obtain a multilayer wound roll of heat-resistant polymer film; and
(2) a step of subjecting the multilayer wound roll of heat-resistant polymer film to a heat treatment at a temperature of 40°C to 180°C to bond the two heat-resistant polymer films to each other. In other words, the method is excellent in productivity since the step of superimposing the polymer films to be laminated one on another and the step of conducting a chemical reaction by post-heating are separated from each other and the time-consuming chemical reactions can be collectively conducted by a batch process.

In the present invention, examples of a method for interposing this reactive compound between the bonding surfaces preferably include a method in which the bonding surface of at least either of the two heat-resistant polymer films is treated with an organic compound having two or more amino groups and a boiling point of 250°C or less in advance. Since the surface treatment step and the lamination step can be separated by this method, the optimum process conditions for each step can be selected, and the degree of freedom in production design is high.

In the present invention, an organic compound having two or more amino groups and a boiling point of 250°C or less is applied to the bonding surface of at least either of the two heat-resistant polymer films and then the two heat-resistant polymer films can be superimposed one on the other and wound. According to this method, the surface treatment step can be replaced with a simple coating step and the step of superimposing the bonding surfaces of films can be easily realized.

BRIEF DESCRIPTION OF THE DRAWINGS

Fig. 1 is a schematic diagram illustrating an example of a production apparatus for applying a polyvalent amine compound or a reactive compound to a roll-shaped film and winding the film in a roll shape.

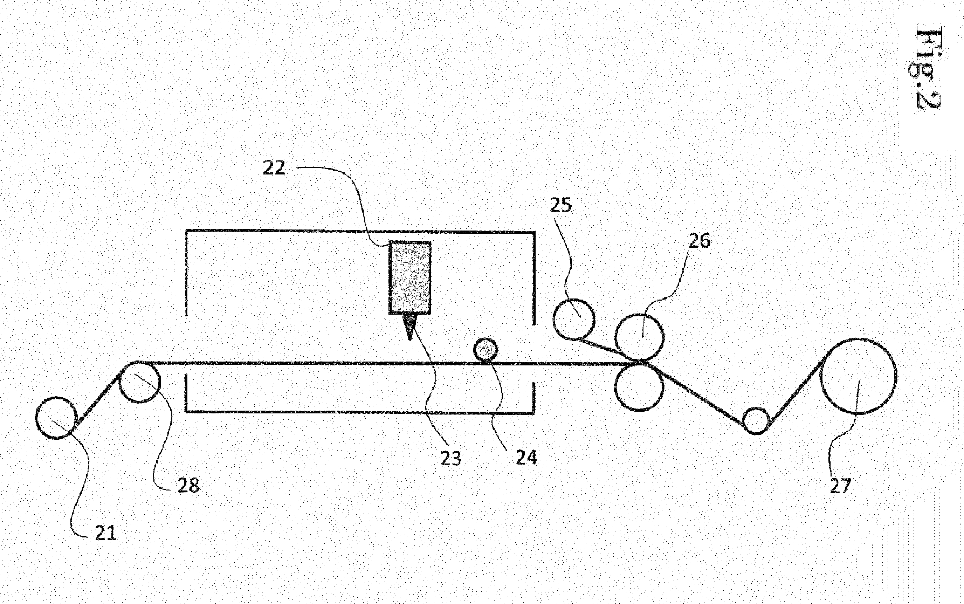

Fig. 2 is a schematic diagram illustrating an example of a production apparatus for applying a polyvalent amine compound or a reactive compound to a roll-shaped film and winding the film in a roll shape.
Fig. 3 is a schematic diagram illustrating an example of a production apparatus for applying a polyvalent amine compound or a reactive compound to a roll-shaped film in a gas phase state and winding the film in a roll shape.

MODE FOR CARRYING OUT THE INVENTION

<Heat-resistant polymer film>

The heat-resistant polymer film of the present invention is films of so-called engineering plastics. Engineering plastics are a taxonomic name that refers to a group of plastics that particularly have excellent strength and have enhanced specific functions such as heat resistance. In the present invention, engineering plastics are polymer materials having a tensile strength of 49 MPa or more and a flexural modulus of 2.5 GPa or more even when exposed to an environment of 100°C or more for a long time, and examples thereof include polyester films such as polyethylene terephthalate, polyethylene naphthalate, polybutylene terephthalate, and fully aromatic polyester (so-called liquid crystal film), a film of fluororesin typified by polytetrafluoroethylene, an aromatic polyamide film, a polyamide-imide film, a polyimide film, an aromatic polyether film, and an aromatic polyketone film.

In the present specification, the heat-resistant polymer preferably used is a polymer having a melting point of 400°C or more, preferably 500°C or more and a glass transition temperature of 250°C or more, preferably 320°C or more, still more preferably 380°C or more. Hereinafter, the heat-resistant polymer is also simply referred to as a polymer in order to avoid complication. In the present specification, the melting point and the glass transition temperature are determined by differential thermal analysis (DSC). Incidentally, in a case where the melting point exceeds 500°C, it may be determined whether or not the melting point has reached by visually observing the thermal deformation behavior when the heat-resistant polymer is heated at this temperature.

Examples of the heat-resistant polymer film preferably used (hereinafter, also simply referred to as a polymer film) include films of polyimide-based resins (for example, aromatic polyimide resins and alicyclic polyimide resins) such as polyimide, polyamide-imide, polyetherimide, and fluorinated polyimide; copolymerized polyesters (for example, fully aromatic polyester and semi-aromatic polyester) such as polyethylene, polypropylene, polyethylene terephthalate, polybutylene terephthalate, and polyethylene-2,6-naphthalate; copolymerized (meth)acrylates typified by polymethyl methacrylate; polycarbonates; polyamides; polysulfones; polyethersulfones; polyetherketones; cellulose acetates; cellulose nitrates; aromatic polyamides; polyvinyl chloride; polyphenols; polyarylates; polyphenylene sulfides; polyphenylene oxides; and polystyrenes.

The heat-resistant polymer film that can be particularly preferably applied in the present invention is films obtained using so-called super engineering plastics, and more specific examples thereof include an aromatic polyimide film, an aromatic amide film, an aromatic amideimide film, an aromatic benzoxazole film, an aromatic benzothiazole film, and an aromatic benzimidazole film.

The details of the polyimide-based resin film (referred to as a polyimide film in some cases) which is an example of the polymer film will be described below. Generally, the polyimide-based resin film is obtained by: applying a polyamic acid (polyimide precursor) solution which is obtained by a reaction between a diamine and a tetracarboxylic acid in a solvent, to a polyimide film-manufacturing support and drying the solution so as to form a green film (hereinafter, also called as a "polyamic acid film"); and treating the green film by heat at a high temperature so as to cause a dehydration ring-closure reaction on the polyimide film-manufacturing support or in a state of being peeled off from the support.

For the application of the polyamic acid (polyimide precursor) solution, it is possible to appropriately use, for example, conventionally known solution application means such as spin coating, doctor blade, applicator, comma coater, screen printing method, slit coating, reverse coating, dip coating, curtain coating, and slit die coating.

The diamines constituting the polyamic acid are not particularly limited, and aromatic diamines, aliphatic diamines, alicyclic diamines and the like which are usually used for polyimide synthesis can be used. From the viewpoint of the heat resistance, aromatic diamines are preferable, and among the aromatic diamines, aromatic diamines having benzoxazole structures are more preferable. When aromatic diamines having benzoxazole structures are used, a high elastic modulus, low heat shrinkability, and a low coefficient of linear thermal expansion as well as the high heat resistance can be exerted. The diamines can be used singly or in combination of two or more kinds thereof.

The aromatic diamines having benzoxazole structures are not particularly limited, and examples thereof include: 5-amino-2-(p-aminophenyl)benzoxazole; 6-amino-2-(p-aminophenyl)benzoxazole; 5-amino-2-(m-aminophenyl)benzoxazole; 6-amino-2-(m-aminophenyl)benzoxazole; 2,2'-p-phenylenebis(5-aminobenzoxazole); 2,2'-p-phenylenebis(6-aminobenzoxazole); 1-(5-aminobenzoxazolo)-4-(6-aminobenzoxazolo)benzene; 2,6-(4,4'-diaminodiphenyl)benzo[1,2-d:5,4-d']bisoxazole; 2,6-(4,4'-diaminodiphenyl)benzo[1,2-d:4,5-d']bisoxazole; 2,6-(3,4'-diaminodiphenyl)benzo[1,2-d:5,4-d']bisoxazole; 2,6-(3,4'-diaminodiphenyl)benzo[1,2-d:4,5-d']bisoxazole; 2,6-(3,3'-diaminodiphenyl)benzo[1,2-d:5,4-d']bisoxazole; and 2,6-(3,3'-diaminodiphenyl)benzo[1,2-d:4,5-d']bisoxazole.

Examples of the aromatic diamines other than the above-described aromatic diamines having benzoxazole structures include: 2,2'-dimethyl-4,4'-diaminobiphenyl; 1,4-bis[2-(4-aminophenyl)-2-propyl]benzene(bisaniline); 1,4-bis(4-amino-2-trifluoromethylphenoxy)benzene; 2,2'-ditrifluoromethyl-4,4'-diaminobiphenyl; 4,4'-bis(4-aminophenoxy)biphenyl; 4,4'-bis(3-aminophenoxy)biphenyl; bis[4-(3-aminophenoxy)phenyl]ketone; bis[4-(3-aminophenoxy)phenyl]sulfide; bis[4-(3-aminophenoxy)phenyl]sulfone; 2,2-bis[4-(3-aminophenoxy)phenyl]propane; 2,2-bis[4-(3-aminophenoxy)phenyl]-1,1,1,3,3,3-hexafluoropropane; m-phenylenediamine; o-phenylenediamine; p-phenylenediamine; m-aminobenzylamine; p-aminobenzylamine; 3,3'-diaminodiphenylether; 3,4'-diaminodiphenylether; 4,4'-diaminodiphenylether; 3,3'-diaminodiphenylsulfide; 3,3'-diaminodiphenylsulfoxide; 3,4'-diaminodiphenylsulfoxide; 4,4'-diaminodiphenylsulfoxide; 3,3'-diaminodiphenylsulfone; 3,4'-diaminodiphenylsulfone; 4,4'-diaminodiphenylsulfone; 3,3'-diaminobenzophenone; 3,4'-diaminobenzophenone; 4,4'-diaminobenzophenone; 3,3'-diaminodiphenylmethane; 3,4'-diaminodiphenylmethane; 4,4'-diaminodiphenylmethane; bis[4-(4-aminophenoxy)phenyl]methane; 1,1-bis[4-(4-aminophenoxy)phenyl]ethane; 1,2-bis[4-(4-aminophenoxy)phenyl]ethane; 1,1-bis[4-(4-aminophenoxy)phenyl]propane; 1,2-bis[4-(4-aminophenoxy)phenyl]propane; 1,3-bis[4-(4-aminophenoxy)phenyl]propane; 2,2-bis[4-(4-aminophenoxy)phenyl]propane; 1,1-bis[4-(4-aminophenoxy)phenyl]butane; 1,3-bis[4-(4-aminophenoxy)phenyl]butane; 1,4-bis[4-(4-aminophenoxy)phenyl]butane; 2,2-bis[4-(4-aminophenoxy)phenyl]butane; 2,3-bis[4-(4-aminophenoxy)phenyl]butane; 2-[4-(4-aminophenoxy)phenyl]-2-[4-(4-aminophenoxy)-3-methylphenyl]propane; 2,2-bis[4-(4-aminophenoxy)-3-methylphenyl]propane; 2-[4-(4-aminophenoxy)phenyl]-2-[4-(4-aminophenoxy)-3,5-dimethylphenyl]propane; 2,2-bis[4-(4-aminophenoxy)-3,5-dimethylphenyl]propane; 2,2-bis[4-(4-aminophenoxy)phenyl]-1,1,1,3,3,3-hexafluoropropane; 1,4-bis(3-aminophenoxy)benzene; 1,3-bis(3-aminophenoxy)benzene; 1,4-bis(4-aminophenoxy)benzene; 4,4'-bis(4-aminophenoxy)biphenyl; bis[4-(4-aminophenoxy)phenyl]ketone; bis[4-(4-aminophenoxy)phenyl]sulfide; bis[4-(4-aminophenoxy)phenyl]sulfoxide; bis[4-(4-aminophenoxy)phenyl]sulfone; bis[4-(3-aminophenoxy)phenyl]ether; bis[4-(4-aminophenoxy)phenyl]ether; 1,3-bis[4-(4-aminophenoxy)benzoyl]benzene; 1,3-bis[4-(3-aminophenoxy)benzoyl]benzene; 1,4-bis[4-(3-aminophenoxy)benzoyl]benzene; 4,4'-bis[(3-aminophenoxy)benzoyl]benzene; 1,1-bis[4-(3-aminophenoxy)phenyl]propane; 1,3-bis[4-(3-aminophenoxy)phenyl]propane; 3,4'-diaminodiphenylsulfide; 2,2-bis[3-(3-aminophenoxy)phenyl]-1,1,1,3,3,3-hexafluoropropane; bis[4-(3-aminophenoxy)phenyl]methane; 1,1-bis[4-(3-aminophenoxy)phenyl]ethane; 1,2-bis[4-(3-aminophenoxy)phenyl]ethane; bis[4-(3-aminophenoxy)phenyl]sulfoxide; 4,4'-bis[3-(4-aminophenoxy)benzoyl]diphenylether; 4,4'-bis[3-(3-aminophenoxy)benzoyl]diphenylether; 4,4'-bis[4-(4-amino-$\alpha,\alpha$-dimethylbenzyl)phenoxy]benzophenone; 4,4'-bis[4-(4-amino-$\alpha,\alpha$-dimethylbenzyl)phenoxy]diphenylsulfone; bis[4-{4-(4-aminophenoxy)phenoxy}phenyl]sulfone; 1,4-bis[4-(4-aminophenoxy)phenoxy-$\alpha,\alpha$-dimethylbenzyl]benzene; 1,3-bis[4-(4-aminophenoxy)phenoxy-$\alpha,\alpha$-dimethylbenzyl]benzene; 1,3-bis[4-(4-amino-6-trifluoromethylphenoxy)-$\alpha,\alpha$-dimethylbenzyl]benzene; 1,3-bis[4-(4-amino-6-fluorophenoxy)-$\alpha,\alpha$-dimethylbenzyl]benzene; 1,3-bis[4-(4-amino-6-methylphenoxy)-$\alpha,\alpha$-dimethylbenzyl]benzene; 1,3-bis[4-(4-amino-6-cyanophenoxy)-$\alpha,\alpha$-dimethylbenzyl]benzene; 3,3'-diamino-4,4'-diphenoxybenzophenone; 4,4'-diamino-5,5'-diphenoxybenzophenone; 3,4'-diamino-4,5'-diphenoxybenzophenone; 3,3'-diamino-4-phenoxybenzophenone; 4,4'-diamino-5-phenoxybenzophenone, 3,4'-diamino-4-phenoxybenzophenone; 3,4'-diamino-5'-phenoxybenzophenone; 3,3'-diamino-4,4'-dibiphenoxybenzophenone; 4,4'-diamino-5,5'-dibiphenoxybenzophenone; 3,4'-diamino-4,5'-dibiphenoxybenzophenone; 3,3'-diamino-4-biphenoxybenzophenone; 4,4'-diamino-5-biphenoxybenzophenone; 3,4'-diamino-4-biphenoxybenzophenone; 3,4'-diamino-5'-biphenoxybenzophenone; 1,3-bis(3-amino-4-phenoxybenzoyl)benzene; 1,4-bis(3-amino-4-phenoxybenzoyl)benzene; 1,3-bis(4-amino-5-phenoxybenzoyl)benzene; 1,4-bis(4-amino-5-phenoxybenzoyl)benzene; 1,3-bis(3-amino-4-biphenoxybenzoyl)benzene, 1,4-bis(3-amino-4-biphenoxybenzoyl)benzene; 1,3-bis(4-amino-5-biphenoxybenzoyl)benzene; 1,4-bis(4-amino-5-biphenoxybenzoyl)benzene; 2,6-bis[4-(4-amino-$\alpha,\alpha$-dimethylbenzyl)phenoxy]benzonitrile; and aromatic diamines obtained by substituting a part or all of hydrogen atoms on an aromatic ring of the above-described aromatic diamines with halogen atoms; C1-3 alkyl groups or alkoxyl groups; cyano groups; or C1-3 halogenated alkyl groups or alkoxyl groups in which a part or all of hydrogen atoms of an alkyl group or alkoxyl group are substituted with halogen atoms.

Examples of the aliphatic diamines include: 1,2-diaminoethane; 1,4-diaminobutane; 1,5-diaminopentane; 1,6-diaminohexane; and 1,8-diaminooctane.

Examples of the alicyclic diamines include: 1,4-diaminocyclohexane and 4,4-methylenebis(2,6-dimethylcyclohexylamine).

The total amount of diamines (aliphatic diamines and alicyclic diamines) other than the aromatic diamines is preferably 20% by mass or less, more preferably 10% by mass or less, still more preferably 5% by mass or less of the total amount of all the diamines. In other words, the amount of aromatic diamines is preferably 80% by mass or more, more preferably 90% by mass or more, still more preferably 95% by mass or more of the total amount of all the diamines.

As tetracarboxylic acids constituting the polyamic acid, aromatic tetracarboxylic acids (including anhydrides thereof), aliphatic tetracarboxylic acids (including anhydrides thereof) and alicyclic tetracarboxylic acids (including anhydrides thereof), which are usually used for polyimide synthesis, can be used. Among these, aromatic tetracarboxylic anhydrides and alicyclic tetracarboxylic anhydrides are preferable, aromatic tetracarboxylic anhydrides are more preferable from the viewpoint of the heat resistance, and alicyclic tetracarboxylic acids are more preferable from the viewpoint of light transmittance. In a case where these are acid anhydrides, the acid anhydrides may have one anhydride structure or two anhydride structures in the molecule, but one (dianhydride) having two anhydride structures in the molecule is preferable. The tetracarboxylic acids may be used singly or in combination of two or more kinds thereof.

Examples of the alicyclic tetracarboxylic acids include: alicyclic tetracarboxylic acids such as cyclobutanetetracarboxylic acid; 1,2,4,5-cyclohexanetetracarboxylic acid; 3,3',4,4'-bicyclohexyltetracarboxylic acid; and anhydrides thereof. Among these, dianhydrides having two anhydride structures (for example, cyclobutanetetracarboxylic dianhydride, 1,2,4,5-cyclohexanetetracarboxylic dianhydride, 3,3',4,4'-bicyclohexyltetracarboxylic dianhydride and the like) are suitable. Incidentally, the alicyclic tetracarboxylic acids may be used singly or in combination of two or more kinds thereof.

For obtaining high transparency, the amount of the alicyclic tetracarboxylic acids is preferably 80% by mass or more, more preferably 90% by mass or more, still more preferably 95% by mass or more of, for example, the total amount of all the tetracarboxylic acids.

The aromatic tetracarboxylic acids are not particularly limited, but a pyromellitic acid residue (namely, one having a structure derived from pyromellitic acid) is preferable, and an anhydride thereof is more preferable. Examples of these aromatic tetracarboxylic acids include: pyromellitic dianhydride; 3,3',4,4'-biphenyltetracarboxylic dianhydride; 4,4'-oxydiphthalic dianhydride; 3,3',4,4'-benzophenonetetracarboxylic dianhydride; 3,3',4,4'-diphenylsulfonetetracarboxylic dianhydride; and 2,2-bis[4-(3,4-dicarboxyphenoxy)phenyl]propionic anhydride.

For obtaining high heat resistance, the amount of the aromatic tetracarboxylic acids is preferably 80% by mass or more, more preferably 90% by mass or more, still more preferably 95% by mass or more of, for example, the total amount of all the tetracarboxylic acids.

The thickness of the polymer film is preferably 3 $\mu$m or more, more preferably 11 $\mu$m or more, still more preferably 24 $\mu$m or more, yet still more preferably 45 $\mu$m or more. The upper limit of the thickness of the polymer film is not particularly limited but is preferably 250 $\mu$m or less, more preferably 150 $\mu$m or less, still more preferably 90 $\mu$m or less for use as a flexible electronic device.

The average CTE of the polymer film at between 30°C and 500°C is preferably -5 ppm/°C to +20 ppm/°C, more preferably -5 ppm/°C to +15 ppm/°C, still more preferably 1 ppm/°C to +10 ppm/°C. When the CTE is in the above range, a small difference in coefficient of linear thermal expansion between the polymer film and a general support (inorganic support) can be maintained, and the polymer film can be prevented from being peeled off from the inorganic support even in a process of heating. Here, CTE is a factor that represents reversible expansion and contraction with respect to the temperature.

The thermal contraction rate of the polymer film at between 30°C and 500°C is preferably ± 0.9% still more preferably ± 0.6%. The thermal contraction rate is a factor that represents irreversible expansion and contraction with respect to the temperature.

The tensile breaking strength of the polymer film is preferably 60 MPa or more, more preferably 120 MP or more, still more preferably 240 MPa or more. The upper limit of the tensile breaking strength is not particularly limited but is practically less than about 1000 MPa. The tensile breaking strength of the polymer film refers to the average value of the tensile breaking strength in the flow direction (MD direction) and the tensile breaking strength in the width direction (TD direction) of the polymer film.

Unevenness of the thickness of the polymer film is preferably 20% or less, more preferably 12% or less, still more preferably 7% or less, particularly preferably 4% or less. When the evenness of the thickness exceeds 20%, the polyimide film tends to be hardly applied to a narrow part. Incidentally, unevenness of the thickness of a film can be determined based on the following equation from film thicknesses, which are measured at about 10 randomly extracted points of a film to be measured by using, for example, a contact-type film thickness meter.

Unevenness of thickness of film (%)

$$= 100 \times \text{(maximum film thickness} - \text{minimum film}$$

$$\text{thickness)} \div \text{average film thickness}$$

The polymer film preferably has a form of being wound as a long polymer film that has a width of 300 mm or more and a length of 10 m or more at the time of production, and more preferably has a form of a roll-shaped polymer film wound around a winding core. When the polymer film is wound in a roll shape, the polymer film is easily transported in the form of a heat-resistant polymer film subjected to a surface treatment.

In order to secure handleability and productivity of the polymer film, a lubricant (particles) having a particle size of about 10 to 1000 nm is preferably added to be contained in the polymer film in an amount of about 0.03% to 3% by mass so as to provide fine ruggedness onto the surface of the polymer film, thereby securing slipperiness.

The polymer film may have been subjected to surface activation treatment. The surface activation treatment in the present specification is dry or wet surface treatment. Examples of the dry surface treatment include vacuum plasma treatment, normal pressure plasma treatment, treatment of irradiating the surface with active energy rays such as ultraviolet rays, electron beams, and X rays, corona treatment, flame treatment, and Itro treatment. Examples of the wet surface treatment include treatment of bringing the surface of the polymer film into contact with an acid or alkali solution.

A plurality of the surface activation treatments may be performed in combination. In the surface activation treatment, the surface of the polymer film is cleaned and an active functional group is generated. The generated functional group is bound with the polyvalent amine compound by a hydrogen bond, a chemical reaction or the like, and the polymer film and the polyvalent amine compound can be firmly bonded to each other.

The polymer film may have a protective film laminated on one side or both sides. The protective film is a film that is pasted to the polymer film in order to protect the polymer film until the polymer film is used, and the protective film is peeled off from the polymer film when the polymer film is used.

<Polyvalent amine compound>

The organic compound of the present invention having two or more amino groups and a boiling point of 250°C or less (hereinafter, also referred to as a polyvalent amine or a polyvalent amine compound). The polyvalent amine compound is not particularly limited as long as it is a compound having two or more amines. In the present specification, the amine refers to a primary amine. In other words, in the present specification, in the case of counting the number of amines contained in a polyvalent amine compound, the number of primary amines is counted. For example, triethylenetetramine has two primary amines and two secondary amines and is classified as a diamine but not a tetramine since triethylenetetramine has two primary amines.

Specific examples of the polyvalent amine compound include hydrocarbon-based diamines such as 1,2-ethanediamine (ethylenediamine), 1,3-propanediamine, 2-methyl-2-propyl-1,3-propanediamine, 1,2-propanediamine, 2-methyl-1,3-propanediamine, 1,4-butanediamine (putrescine), 2,3-dimethyl-1,4-butanediamine, 1,3-butanediamine, 1,2-butandiamine, 2-ethyl-1,4-butanediamine, 2-methyl-1,4-butanediamine, 1,5-pentanediamine, 2-methyl-1,5-pentanediamine (2-methyl1,5-diaminopentane), 3-methyl-1,5-pentanediamine, 3,3-dimethyl-1,5-pentanediamine, 1,4-pentanediamine, 2-methyl-1,4-pentanediamine, 3-methyl-1,4-pentanediamine, 1,3-pentanediamine, 4,4-dimethyl-1,3-pentanediamine, 2,2,4-trimethyl-1,3-pentanediamine, 1,2-pentanediamine, 4-methyl-1,2-pentanediamine, 4-ethyl-1,2-pentanediamine, 3-methyl-1,2-pentanediamine, 3-ethyl-1,2-pentanediamine, 2-methyl-1,3-pentanediamine, 4-methyl-1,3-pentanediamine, 1,3,5-pentanetriamine, 1,6-hexanediamine (hexamethylenediamine), 3-methyl-1,6-hexanediamine, 3,3-dimethyl-1,6-hexanediamine, 3-ethyl-1,6-hexanediamine, 1,5-hexanediamine, 1,4-hexanediamine, 1,3-hexanediamine, 1,2-hexanediamine, 2,5-hexanediamine, 2,5-dimethyl-2,5-hexanediamine, 2,4-hexanediamine, 2-methyl-2,4-hexanediamine, 2,3-hexanediamine, 5-methyl-2,3-hexanediamine, 3,4-hexanediamine, 1,7-heptanediamine, 1,4,7-heptanetriamine, 2-methyl-1,7-heptanediamine, 1,6-heptanediamine, 1,5-heptanediamine, 1,4-heptanediamine, 1,3-heptanediamine, 1,2-heptanediamine, 2,6-heptanediamine, 2,5-heptanediamine, 2,4-heptanediamine, 2,3-heptanediamine, 3,5-heptanediamine, 3,4-heptanediamine, 1,8-octanediamine, 1,7-octanediamine, 1,6-octanediamine, 1,5-octanediamine, 1,4-octanediamine, 1,3-octanediamine, 1,2-octanediamine, 2,7-octanediamine, 2,7-dimethyl-2,7-octanediamine, 2,6-octanediamine, 2,5-octanediamine, 2,4-octanediamine, 2,3-octanediamine, 3,6-octanediamine, 3,5-octanediamine, 3,4-octanediamine, diethylenetriamine, triethylenetetramine, and 1,4,8-triazaoctane.

Other specific examples of the polyvalent amine compound include aromatic diamines and alicyclic diamines. Examples thereof include pyridine-2,4-diamine, N2,N6-dimethyl-2,6-pyridinediamine, 2-pyridineamine, 2,3-pyridinediamine, 4,6-pyrimidinediamine, 2,4,6-pyrimidinetriamine, 2-amino-4-pyridinemethaneamine, 2,3-pyrazinediamine, 2,5-pyridinediamine 1,2-cyclohexanediamine, 1-methyl-1,2-cyclohexanediamine, 3-methyl-1,2-cyclohexanediamine, 4-methyl-1,2-cyclohexanediamine, 1,2-diamino-4-cyclohexene, 1,3-cyclohexanediamine, 2-methyl-1,3-cyclohexanediamine, 1,4-cyclohexanediamine, 1,2,3-cyclohexanetriamine, 1,2-cyclopentanediamine, 1,3-cyclopentanediamine, and 4,4'-methylenebis(cyclohexylamine).

Among the polyvalent amine compounds, those having a molecular weight of 300 or less are preferable, those having a molecular weight of 250 or less are more preferable, and those having a molecular weight of 200 or less are more preferable. When the molecular weight of the polyvalent amine compound is 300 or less, there are a large number of compounds in a liquid state at room temperature, and these compounds can be conveniently used in the gas phase coating method.

Among the polyvalent amine compounds, those having a boiling point of 250°C or less are preferable, 215°C or less are still more preferable, and 180°C or less are yet more preferable.

The boiling point of the polyvalent amine is preferably 50°C or more, still more preferably 70°C or more, yet still more preferably 90°C or more.

When the boiling point of the polyvalent amine compound is equal to or higher than the lower limit of a predetermined range, it is possible to prevent the polyvalent amine compound from volatilizing during step B described later. When the boiling point of the polyvalent amine compound is equal to or lower than the upper limit of a predetermined range, it is possible to suitably volatilize the excess polyvalent amine compound in step C described later.

Among the polyvalent amine compounds, a branched aliphatic polyvalent amine compound is preferable. When the polyvalent amine compound is a diamine compound, the bonding force (peel strength) of the polymer film with the inorganic substrate is more favorable. Even if the laminate after being pasted to the inorganic substrate is exposed to a high temperature (for example, at 500°C for 1 hour), it is possible to further suppress an increase in peel strength.

Examples of a method for obtaining the laminate of the present invention include a lamination method including at least the following steps. A method for producing a heat-resistant polymer film laminate, which includes at least:

(1) superimposing at least two heat-resistant polymer films in a state where an organic compound having two or more amino groups and a boiling point of 250°C or less exists between the heat-resistant polymer films; and
(2) a step of subjecting the superimposed heat-resistant polymer films to a heat treatment at a temperature of 40°C to 180°C.

Here, as the superimposition, the films may be superimposed one on another in a single-wafer sheet shape or long films may be continuously superimposed one on another and wound in a roll shape.

The polyvalent amine compound is applied to at least either of the polymer film bonding surfaces to be bonded. As the coating method, a method for applying a polyvalent amine compound solution to the polymer film, a gas phase coating method, and the like can be used. The polyvalent amine compound may be applied to either surface or both surfaces of the polymer film.

As the method for applying the polyvalent amine compound solution, it is possible to use a solution of the polyvalent amine compound diluted with a solvent such as an alcohol and to appropriately use conventionally known solution application means such as spin coating method, curtain coating method, dip coating method, slit die coating method, gravure coating method, bar coating method, comma coating method, applicator method, screen printing method, and spray coating method.

The polyvalent amine compound can also be applied by a gas phase coating method. Specifically, the polyvalent amine compound layer is formed by exposing the polymer film to the vapor of the polyvalent amine compound, namely, to the polyvalent amine compound substantially in a gaseous state. The vapor of the polyvalent amine compound can be obtained by heating the polyvalent amine compound in a liquid state to a temperature from room temperature to about the boiling point of the polyvalent amine compound.

The environment for heating the polyvalent amine compound may be under any of applied pressure, normal pressure, or reduced pressure but is preferably under normal pressure or reduced pressure in the case of promoting the vaporization of the polyvalent amine compound.

The time for exposing the polymer film to the polyvalent amine compound is not particularly limited, but is preferably within 20 hours, more preferably within 60 minutes, still more preferably within 15 minutes, most preferably within 1 minute.

The temperature of the polymer film during exposure of the polymer film to the polyvalent amine compound is preferably controlled to an appropriate temperature between -50°C and 200°C depending on the kind of the polyvalent amine compound and the desired degree of surface treatment.

In the present invention, the heat-resistant polymer film after being coated with the polyvalent amine compound is preferably held in a temperature range of 0°C or more and less than 60°C, preferably in a temperature range of 10°C or more and less than 55°C, more preferably in a temperature range of 20°C or more and less than 50°C.

The holding time is preferably in a range of 10 to 600 seconds, still more preferably 30 to 300 seconds. It is effective to include this holding step in order to remove excess polyvalent amine compound.

As described above, a plurality of heat-resistant polymer films coated with a polyvalent amine compound are superimposed one on another so as to sandwich the polyvalent amine compound-coated surface. As the form of superimposition, the heat-resistant polymer films may be superimposed one on another in a single-wafer sheet or long films may be continuously superimposed one on another and wound in a roll shape.

The superimposed heat-resistant polymer films are subjected to a heat treatment in a temperature range of 40°C or more and 180°C or less.

The heat treatment temperature is preferably 60°C or more and 165°C or less, more preferably 80°C or more and 150°C or less. The heat treatment time is preferably 15 seconds or more and 24 hours or less, more preferably 60 seconds or more and 8 hours or less.

In the present invention, it is preferable to concurrently use pressure treatment at the time of superimposition of heat-resistant polymer films. In the pressure treatment, for example, pressing, lamination, roll lamination and the like may be performed in the atmosphere at the atmospheric pressure or in a vacuum while performing heating. A method can also be applied in which pressurization and heating are performed in state where the heat-resistant polymer films are placed in a flexible bag. From the viewpoint of the improvement in productivity and the reduction of processing cost to be brought from high productivity, pressing or roll lamination in the atmosphere at the atmospheric pressure is preferable and a method using a roll (roll lamination or the like) is particularly preferable.

In a case where a laminate is produced by roll lamination, it is desirable that at least either of the upper and lower rolls used for lamination is a roll formed of a flexible material. The roll formed of a flexible material here refers to a silicon rubber roll or the like having an elastic modulus of 300 MPa or less. When at least one of the rolls used for lamination is formed of a flexible material, a high-quality film laminate with less air bubbles can be fabricated.

The pressure at the time of the pressure treatment is preferably 1 MPa to 30 MPa, more preferably 3 MPa to 25 MPa. The support may be damaged when the pressure is too high, there may be some portions that do not come into close contact and this may lead to insufficient bonding when the pressure is too low. The temperature at the time of the pressure treatment is in a range not exceeding the heat resistant temperature of the heat-resistant polymer film to be used.

The pressure treatment can also be performed in the atmosphere at the atmospheric pressure as described above but is preferably performed in a vacuum in order to impart stable bonding strength to the entire surface. At this time, as the degree of vacuum, a degree of vacuum obtained by an ordinary oil-sealed rotary pump, namely, about 10 Torr or less is sufficient.

As an apparatus that can be used for the pressure and heat treatment, for example, an "11FD" manufactured by Imoto Machinery Co., Ltd. or the like can be used for performing pressing in a vacuum. For example, "MVLP" manufactured by MEIKI CO., LTD. or the like can be used for performing vacuum lamination using a roll-type film laminator in a vacuum or a film laminator for evacuating the air and then applying pressure at once to the entire surface of glass by a thin rubber film.

In the present invention, in a case where the superimposed heat-resistant polymer films are wound in a roll shape, the inner diameter of the core used for winding is desirably 3 inches or more, more desirably 6 inches or more. When the inner diameter of the core and the outer diameter of the core are small, warpage of the laminate is caused in a case where the number of laminations increases or the stress applied to the reactive liquid layer existing between the polyimide films becomes large and this leads to peeling off of the heat-resistant polymer films.

In the present invention, the CTE of the core material used for winding is preferably 150 ppm/°C or less, preferably 100 ppm/°C or less. When the CTE of the core material is larger than a predetermined range, the core may be significantly deformed in the heating process for reacting the reactive liquid. The lower limit of CTE of the core material is preferably 20 ppm/°C, yet more preferably 25 ppm/°C. When the CITE is lower than the lower limit, pressure is insufficiently applied to the laminated films, and the interlayer bonding force of the laminate may decrease.

As the core material preferably used in the present invention, metals having a relatively high CTE, for example, aluminum and aluminum alloys and polymer materials such as ABS resin and polypropylene can be used.

In the present invention, it is desirable that the angle θ formed by the tangent line between the laminate and the core at the winding start point of the laminate is 40° or less. When θ is larger than 40°, winding may become unstable.

In the present invention, the unwinding tension of the heat-resistant polymer film is desirably 2 N or more and 15 N or less. The film is likely to undulate when entering the lamination roller when the unwinding tension is less than 2 N, vertical wrinkles are likely to be generated between the unwinding and the lamination roller when the unwinding tension is larger than 15 N, and wrinkling of the laminate is caused and the quality decreases in both cases.

The storage environment in a state where the laminate of the present invention is not yet subjected to a heat treatment is preferably 15°C or less, still more preferably 5°C or less, yet more preferably -5°C or less, still more preferably -15°C or less.

As the conditions under which the heat-resistant polymer film laminate roll in the present invention is subjected to a heat treatment and the reactive liquid existing between the films is reacted, a temperature at which the change length of the wall thickness of the core used for winding is 0.02 mm or more is desirable. By performing the heat treatment at a temperature at which the change length during the heat treatment is 0.02 mm or more, the core expands during the heat treatment, close contact properties between the films become more favorable, and a high-quality laminate can be obtained.

The bonding strength between the film layers of the heat-resistant polymer film laminate in the present invention after a heat treatment is 0.4 N/cm or more and 20 N/cm or less, preferably 0.4 N/cm or more and 18 N/cm, still more preferably 0.4 N/cm or more and 15 N/cm or less as measured by a 90-degree peeling method.

EXAMPLES

Hereinafter, the present invention will be described more specifically with reference to Examples, but the present invention is not limited to the following Examples. The operation method, evaluation method and the like in the following Examples are as follows.

<Film moisture content (moisture amount)>

The film moisture content (moisture amount) was determined by the following method.

A square of approximately 10 cm × 10 cm was cut out from the film and used as a sample, the mass Wi of the film in the initial state (water-retaining condition) was measured, then the mass Wo of the film after being subjected to a heat treatment at 150°C for 30 minutes was measured, and film moisture content (moisture amount) was determined by the following equation.

Moisture content (% by mass) = $100 \times (Wi - Wo)/Wo$

<Number of blisters>

The number of blisters having a diameter of 0.2 mm or more in a 10 cm × 10 cm two-layer laminate was counted. A blister is a type of defect in which a gap is formed between a long polymer film and an inorganic substrate, and is called a float, an air bubble, a bubble and the like in some cases. For a three-layer laminate, the total number of blisters having a diameter of 0.2 mm or more existing in an area of 10 cm × 10 cm was multiplied by 0.5 to be converted to the number of blisters as a two-layer laminate.

<Delamination strength>

The bonding strength between the polyimide film layers of the polyimide film laminate was determined in conformity with the 90-degree peeling method of JIS K6854-1.

Apparatus name: Autograph AG-IS manufactured by Shimadzu Corporation
Measured temperature: Room temperature
Peeling speed: 50 mm/min
Atmosphere: Atmospheric air
Width of measured sample: 1 cm

A cut was made on the surface of a square heat-resistant polymer film laminate having a side of 100 mm as a sample to a depth to be 120% of the film thickness of the outermost layer, the film of the outermost layer was peeled off from the edge of the laminate, and the delamination strength was measured.

<Production Example of polyimide film>

(Preparation of polyamic acid solution)

The inside of a reaction vessel equipped with a nitrogen introducing tube, a thermometer, and a stirring bar was purged with nitrogen, then 223 parts by mass of 5-amino-2-(p-aminophenyl)benzoxazole (DAMBO) and 4416 parts by mass of N,N-dimethylacetamide were added into the reaction vessel and completely dissolved, subsequently 217 parts by mass of pyromellitic dianhydride (PMDA) and a dispersion of colloidal silica as a lubricant dispersed in dimethylacetamide ("Snowtex (registered trademark) DMAC-ST30" manufactured by Nissan Chemical Corporation) were added to the solution so that the silica (lubricant) was 0.12% by mass with respect to the total amount of polymer solids in the polyamic acid solution, and the mixture was stirred at a reaction temperature of 25°C for 24 hours, thereby obtaining a brown and viscous polyamic acid solution V1.

(Fabrication Example of polyimide film)

The polyamic acid solution V1 obtained above was applied to the smooth side (lubricant-free side) of a long polyester film ("A-4100" manufactured by TOYOBO CO., LTD.) having a width of 1050 mm using a slit die so that the final film thickness (film thickness after imidization) was 38 μm, dried at 105°C for 20 minutes, and then peeled off from the polyester film to obtain a self-supporting polyamic acid film having a width of 820 mm.
The polyamic acid film obtained above was obtained, and then subjected to a heat treatment at 150°C for 5 minutes in the first stage, 200°C for 5 minutes in the second stage, and 500°C for 10 minutes in the third stage using a pin tenter for imidization, and the pin grips at both edges were removed by slitting to obtain a long polyimide film X (1000 m roll) having a width of 720 mm.

<Gas phase coating>

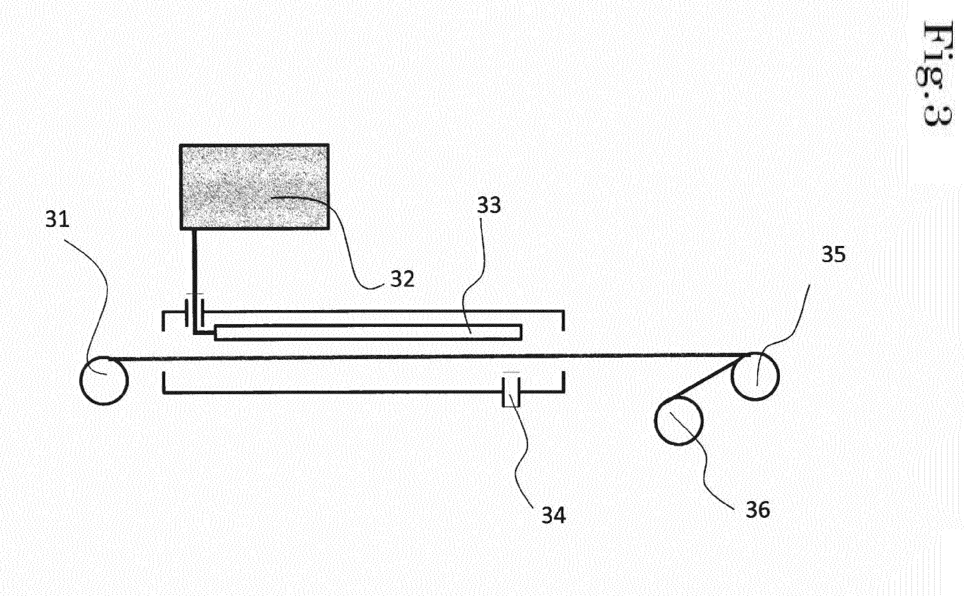

The reactive liquid (polyvalent amine compound) was applied to the heat-resistant polymer film under the following conditions using the apparatus which was for generating the vapor of a reactive liquid and had the outline illustrated in Fig. 3.
A heat-resistant polymer film slit to have a width of 220 mm was allowed to pass through the inside of a chamber of 750 mm × 20 mm × 10 mm having a slit of 20 mm × 250 mm at a speed of 240 mm/min.
The temperature of a vessel containing 100 g of a predetermined reactive liquid (polyvalent amine compound) was adjusted to 40°C, then nitrogen gas was sent into the vessel at 20 L/min in the manner of bubbling, the nitrogen gas containing the generated reactive liquid vapor was introduced into the chamber in the previous period through a pipe, both sides of the heat-resistant polymer film were exposed to the gas for 3 minutes, and then the heat-resistant polymer film was wound in a roll shape.

<Spin coating>

The heat-resistant polymer film cut into a square having a side of 220 mm was set on a spin coater, the spin coater was rotated at 500 rpm, a predetermined amount of reactive liquid (polyvalent amine compound or silane coupling agent) was dropped on the heat-resistant polymer film, subsequently the number of revolutions was increased to 1500, the excess reactive liquid was shaken off, and then the coated heat-resistant polymer film was allowed to stand in a drying oven at 40°C for 5 minutes.

<Comparative Example 1>

Ethylenediamine was applied to polyethylene terephthalate film E5100 (100 μm thick) (hereinafter abbreviated as PET film) manufactured by TOYOBO CO., LTD. as a heat-resistant polymer film by a spin coating method, then three ethylenediamine-coated substrates obtained were stacked, and a release sheet was sandwiched between these, and a pressure of 100 Pa was applied to the stacked body for pressure reduction by vacuum pressing to perform temporary bonding. Subsequently, the temporarily bonded laminate plate thus obtained was placed in a clean oven and heated at 30°C for 48 hours in a nitrogen atmosphere to obtain a heat-resistant polymer film-polyimide film laminate. The evaluation results of the obtained heat-resistant polymer film laminate are presented in Table 1.

<Example 1>

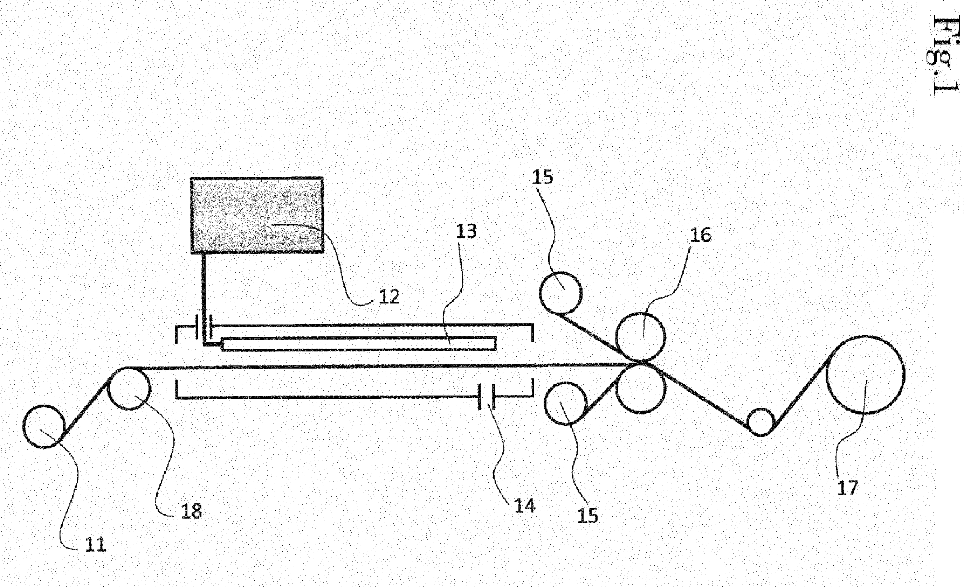

Three rolls of the same heat-resistant polymer film as that in Comparative Example were prepared, and one roll was set in the inner film unwinding unit and the other two rolls were set in the outer film unwinding unit using the apparatus illustrated in Fig. 1. The water contents in the respective films at the time of setting were all 0.19% by mass.
Each roll was unwound and passed through as illustrated in the figure, and both sides of the inner layer polyimide film were exposed to the vapor of a reactive liquid (ethylenediamine), immediately after that, the front and the back were stacked in the form of being sandwiched with two polyimide films for exterior use, and wound as a three-layer multilayer film on a 12-inch aluminum core to obtain a multilayer wound roll. The obtained multilayer wound roll was placed in an inert oven at 50°C and subjected to a heat treatment for 24 hours, thereby obtaining a heat-resistant polymer film laminate.
The method for generating the vapor of a reactive liquid (ethylenediamine) and the method for exposing the heat-resistant polymer film to the vapor were as follows.
The temperature of a vessel containing 100 g of a reactive liquid (ethylenediamine) was adjusted to 40°C, then nitrogen gas was sent into the vessel at 20 L/min in the manner of bubbling, the nitrogen gas containing the generated ethylenediamine vapor was introduced into the chamber of the apparatus illustrated in Fig. 1 through a pipe, both sides of the polyimide film were exposed to the gas for 3 minutes.

<Examples 2 to 6 and Comparative Examples 2 and 3>

Heat-resistant polymer film laminates were fabricated and evaluated using the heat-resistant polymer films, polyvalent amine compounds, and silane coupling agents presented in the following Table 1 under the conditions presented in the following Table 1. The results are presented in Table 1.

[Table 1]

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Heat-resistant polymer film | PET | PET | PEN | PEN | V1 | PI-2 | PET | PEN | PI-2 |
| Polyvalent amine compound (reactive compound) | EDA | HMDA | EDA | HMDA | HMDA | HMDA | EDA | HMDA | SCA |
| Coating method | Gas phase coating | Gas phase coating | Gas phase coating | Gas phase coating | Gas phase coating | Spin coating | Spin coating | Spin coating | Spin coating |
| Lamination method | Rolling | Rolling | Rolling | Pressing | Rolling | Rolling | Pressing | Pressing | Pressing |
| Number of laminations | 3 | 3 | 3 | 5 | 3 | 3 | 3 | 3 | 3 |
| Film moisture content [% by mass] | 0.19 | 0.15 | 0.11 | 0.12 | 0.37 | 0.32 | 0.16 | 0.12 | 0.38 |
| Winding tension [N/cm] | 1.5 | 1.5 | 1.5 | 1.5 | 1.5 | 1.5 | 1.5 | 1.5 | 1.5 |
| Heat treatment temperature (°C) | 50 | 115 | 150 | 150 | 180 | 180 | 30 | 200 | 180 |
| Heat treatment time (hr) | 24 | 8 | 5 | 5 | 3 | 3 | 48 | 3 | 3 |
| Number of plisters (pieces/100 square cm) | 4 | 3 | 4 | 2 | 3 | 5 | 47 | 79 | 126 |
| Quality (visual observation) | Favorable | Favorable | Favorable | Favorable | Favorable | Favorable | Poor | Poor | Poor |
| Delamination strength (N/cm) | 4.7 | 5.6 | 6.3 | 7.1 | 7.8 | 7.4 | 0.3 | 2.5 | 8.9 |

In Table 1

PET: Polyethylene terephthalate film E5100 (100 $\mu$m thick) manufactured by TOYOBO CO., LTD.
PEN: Polyethylene naphthalate film Teonex Teonex (100 $\mu$m thick) manufactured by TEIJIN LIMITED
V1: Polyimide film obtained in Production Example of polyimide film
PI-2: Polyimide film Kapton H (100 $\mu$m thick) manufactured by DU PONT-TORAY CO., LTD.
EDA: Ethylenediamine
HMDA; Hexamethylenediamine
SCA: Silane coupling agent ("KBE-903" manufactured by Shin-Etsu Chemical Co., Ltd.: 3-aminopropyltriethoxysilane).

INDUSTRIAL APPLICABILITY

As described above, the heat-resistant polymer film laminate of the present invention is a laminate with few blister defects, can also be fabricated as a longer film laminate, and is a laminate that does not impair the excellent physical properties realized by a thin film while being a thick film or sheet. The laminate of the present invention is a laminate that does not impair the heat resistance of heat-resistant polymer film since a so-called bonding material is not used in the laminate, is also excellent in terms of cost since the method for producing the laminate is efficient, and can be used in various industrial fields.

DESCRIPTION OF REFERENCE SIGNS

11 Film unwinding unit
12 Coating liquid supply unit
13 Coating liquid discharge unit
14 Exhaust port for coating liquid vapor
15 Long base material unwinding unit
16 Pressurization unit
17 Winding unit
18 Height adjustment roll for long base material
21 Film unwinding unit
22 Coating liquid supply unit
23 Coating liquid discharge unit
24 Wire bar
25 Long base material unwinding unit
26 Pressurization unit
27 Winding unit
28 Height adjustment roll for long base material
31 Film unwinding unit
32 Coating liquid supply unit
33 Coating liquid discharge unit
34 Exhaust port for coating liquid vapor
35 Film winding unit
36 Inserting paper supply roll
41 Film laminate
42 Winding unit

**Claims**

1. A heat-resistant polymer film laminate comprising a structure in which at least two heat-resistant polymer films are laminated, wherein there is an amide bond derived from an organic compound having two or more amino groups and a boiling point of 250°C or less at a laminated interface of the two heat-resistant polymer films.

2. A method for producing a heat-resistant polymer film laminate having a structure in which at least two heat-resistant polymer films are laminated, the method comprising at least:

(1) a step of winding the at least two heat-resistant polymer films in a state where an organic compound having two or more amino groups and a boiling point of 250°C or less exists between the at least two heat-resistant polymer films to obtain a multilayer wound roll of heat-resistant polymer film; and
(2) a step of subjecting the multilayer wound roll to a heat treatment at a temperature of 40°C to 180°C to bond the at least two heat-resistant polymer films to each other.

3. The method for producing a heat-resistant polymer film laminate according to claim 2, wherein a bonding surface of at least either of the heat-resistant polymer films is treated with an organic compound having two or more amino groups and a boiling point of 250°C or less in advance.

4. The method for producing a heat-resistant polymer film laminate according to claim 2, wherein the state where an organic compound having two or more amino groups and a boiling point of 250°C or less exists between the at least two heat-resistant polymer films is formed by applying the organic compound to a bonding surface of at least either of the at least two heat-resistant polymer films.

5. The method for producing a heat-resistant polymer film laminate according to any one of claims 2 to 4, wherein a tension applied to films when the films are wound in the roll shape is 0.001 N/cm to 12 N/cm.

6. The method for producing a heat-resistant polymer film laminate according to any one of claims 2 to 5, wherein a water content in a heat-resistant polymer film before being subjected to the heat treatment is in a range of 0.5% to 4.0% by mass.

# Fig.1

# Fig.2

# Fig.3

# EP 3 950 273 A1

<table>
<tr><td colspan="2" style="text-align:center"><strong>INTERNATIONAL SEARCH REPORT</strong></td><td colspan="2">International application No.<br>PCT/JP2020/014595</td></tr>
</table>

**A. CLASSIFICATION OF SUBJECT MATTER**
B29C 63/02(2006.01)i; B32B 27/00(2006.01)i; B65H 23/195(2006.01)i; B32B 37/06(2006.01)i; B32B 37/12(2006.01)i; B29C 65/02(2006.01)i; B29C 65/48(2006.01)i; B32B 7/027(2019.01)i
FI:      B32B27/00 C; B32B7/027; B32B27/00 D; B32B37/12; B32B37/06;
         B32B27/00 B; B29C65/02; B29C65/48; B29C63/02; B65H23/195

According to International Patent Classification (IPC) or to both national classification and IPC

**B. FIELDS SEARCHED**

Minimum documentation searched (classification system followed by classification symbols)
B29C63/02; B32B27/00; B65H23/195; B32B37/06; B32B37/12; B29C65/02; B29C65/48; B32B7/027

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 8-198990 A (KANEGAFUCHI CHEM IND CO., LTD.) 06.08.1996 (1996-08-06) claims, paragraphs [0002], [0033]-[0038], examples | 1 |
| X | JP 1-249338 A (MITSUI SEKIYU KAGAKU KOGYO KABUSHIKI KAISHA) 04.10.1989 (1989-10-04) claims, page 4, upper left column, line 19 to page 5, upper right column, line 8, page 7, upper left column, line 19 to upper right column, line 6, examples | 1 |
| A | JP 3-164241 A (TOYOBO BOSEKI KABUSHIKI KAISHA) 16.07.1991 (1991-07-16) claims, examples | 1-6 |
| A | JP 2000-239423 A (KANEGAFUCHI CHEM IND CO., LTD.) 05.09.2000 (2000-09-05) claims, examples | 1-6 |

☒ Further documents are listed in the continuation of Box C.    ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 12 June 2020 (12.06.2020) | 23 June 2020 (23.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

19

## INTERNATIONAL SEARCH REPORT

| | International application No. |
|---|---|
| | PCT/JP2020/014595 |

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2008/018399 A1 (NIPPON STEEL CHEMICAL CO., LTD.) 14.02.2008 (2008-02-14) claims, examples | 1-6 |
| A | WO 2017/188174 A1 (TOYOBO CO., LTD.) 02.11.2017 (2017-11-02) claims, examples | 1-6 |
| A | JP 9-3221 A (SHIN-ETSU CHEMICAL CO., LTD.) 07.01.1997 (1997-01-07) claims, examples | 1-6 |
| A | JP 11-48423 A (KANEGAFUCHI CHEM IND CO., LTD.) 23.02.1999 (1999-02-23) claims, examples | 1-6 |

Form PCT/ISA/210 (continuation of second sheet) (January 2015)

**INTERNATIONAL SEARCH REPORT**
Information on patent family members

International application No.

PCT/JP2020/014595

| Patent Documents referred in the Report | Publication Date | Patent Family | Publication Date |
|---|---|---|---|
| JP 8-198990 A | 06 Aug. 1996 | (Family: none) | |
| JP 1-249338 A | 04 Oct. 1989 | (Family: none) | |
| JP 3-164241 A | 16 Jul. 1991 | (Family: none) | |
| JP 2000-239423 A | 05 Sep. 2000 | (Family: none) | |
| WO 2018/018399 A1 | 14 Feb. 2008 | TW 200833746 A | |
| WO 2017/188174 A1 | 02 Nov. 2017 | US 2019/0134963 A1 claims, examples EP 3450164 A1 | |
| JP 9-3221 A | 07 Jan. 1997 | (Family: none) | |
| JP 11-48423 A | 23 Feb. 1999 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015178237 A